# EUROPEAN PATENT SPECIFICATION

(11) **EP 0 962 313 B1**
(45) Date of publication and mention of the grant of the patent: **16.08.2006**
(21) Application number: 98110327.8
(22) Date of filing: 05.06.1998
(51) Int. Cl.: B32B 27/12, A41D 31/02

(54) **Textile laminate**
Textiler Verbundstoff
Matériau textile laminé

(43) Date of publication of application: 08.12.1999
(73) Proprietor: W.L. Gore & Associates GmbH, 85640 Putzbrunn (DE)
(72) Inventor: Opitz, Oliver, 83052 Götting Bruckmühl (DE)
(74) Representative: Weber, Doris

(56) References cited:
- EP-A- 0 081 850
- EP-A- 0 385 024
- WO-A-96/23915
- WO-A-98/18616
- US-A- 4 868 041
- US-A- 5 308 689
- DATABASE WPI Section Ch, Week 9414 Derwent Publications Ltd., London, GB; Class A25, AN 94-115653 XP002083352 & JP 06 065866 A (ASAHI KASEI TEXTILE KK) , 8 March 1994
- DATABASE WPI Section Ch, Week 9516 Derwent Publications Ltd., London, GB; Class A23, AN 95-118368 XP002083353 & JP 07 040485 A (UNITIKA LTD) , 10 February 1995

## Description

### Field of the Invention

The invention relates to a textile laminate made for protective clothing.

### Prior Art

Several different methods for providing textiles suitable for use in protective clothing, such as protective clothing for motorcyclists, are known.

Typically motorcyclists' protective clothing has been made from leather which offers good protection against abrasion and sufficient shock absorption to protect the wearer in the event of an accident.

The use of other textiles are also known in the art. For example, German Patent Application DE-A-196 42 912 (Woods) teaches a protective textile from which protective clothing such as motorcyclist's clothing can be made. The protective textile has two layers. An outer layer is made from fibres which have a high disintegration textile and high mass in order to provide protection from abrasion. The inner layer is designed to act as a shock-absorbing layer.

W.L.Gore & Associates, Feldkirchen-Westerham, Germany, currently sell a liner laminate, known as a Z-liner, made using the techniques disclosed in EP-B-0 081 850 (Kleis) for use in motorcycle protection suits. This laminate consists of a waterproof but water vapour permeable functional layer, made of expanded polytetrafluoroethylene (ePTFE), and an outer shell of polyamide 6.6 or polyester. This laminate has the disadvantage, however, that when it becomes wet, water is collected between the outer shell and the functional layer and the protective clothing becomes substantially heavier.

It is possible to provide laminates in which an outer shell of polyamide 6.6 or polyester is laminated to an ePTFE functional layer. However, until the development of the invention described herein, the laminates did not offer sufficient protection to the wearer in the event of an accident.

Experiments have shown that the extent of protection offered by the material from which the protective clothing is made depends on the stability of the outer shell. This can be increased by providing materials with a heavier weight which, however, has the disadvantage that the weight of the protective clothing is increased. Alternatively one can change the material from which the outer shell is made.

An outer shell made of para-aramid yarn, such as Kevlar® yam, would offer a suitable compromise between the weight of the clothing and the degree of protection offered to the wearer in the event of an accident. However, this yam cannot be coloured and is therefore unsuitable for use where fashion or safety considerations dictate that the protective clothing needs to be coloured. It would be possible to use an outer shell made from a polyamide yarn, such as Cordura® yam, which can be coloured. However, this is not as robust as Kevlar® yam and is therefore unsuitable for protective clothing. A further disadvantage of the Kevlar® yarn is that it disintegrates in ultra-violet (UV) light. Schoeller-Textil in Switzerland have used a core spinning process in which they spin polybenzimidazol (PBI) fibres around a para-amide fibre to provide a yarn which is less susceptible to disintegration by UV light. This is described in Textilwirtschaft Sport, Jan. 98, pp. 78-81 in an article entitled "Wegweiser durch den Markendschungel" by Till Gottbrath, in particular on page 81. PBI fibres are, however, not colourable and thus this yarn is also unsuitable for use in applications in which the protective clothing needs to be coloured.

US Patent US-A- 4 868 041 (Yamagishi et al.) assigned to Toyo Bodeki K.K. teaches cloth made from yarns which have a core-sheath type structure. The core of the yam is made from a polyamide fibre and cotton fibres are disposed about the core to form the sheath. The material is used to weave cloth offering protection against high temperature and flames.

WO 98/18616 A1 discloses an outdoor fabric which comprises a water impermeable but breathable barrier layer sandwiched by first and second layers of multicomponent fibres. The first layer having a sheath/core configuration with a sheath component comprising a polyethylene polymer composition and a core component comprising a a polypropylene polymer composition. The multicomponent fibres in the second layer comprises a core of polyamide 6 and a sheath component of linear low density polyethylene. However, neither the first layer nor the second layer is suitable as high abrasion resistant material for use in protective clothing.

US-A-5,308,689 discloses a waterproof, vapour-permeable synthetic polymer film adhered to a protective layer of woven fabric by a non-continuous layer of adhesive. The woven fabric can be made from monofilaments of bicomponent textile fibers of polyester (65%) and nylon (35%). However, the composite laminate is unsuitable to provide a textile laminate which is highly abrasion-resistant for use in protective clothing for motorcyclists.

JP-A-6065866 discloses a waterproof cloth consists of fabric having a moisture-permeable resin film on one side. The fabric is constituted of a core/sheath yam. The yam has a multifilament polyamide core and a multifilament polyamide sheath. However, the yarn is not very robust and therefore not suitable for protective clothings.

### Summary of the Invention

It is an object of the invention to provide a textile laminate which is highly abrasion-resistant.

It is also an object of the invention to provide a textile laminate which may be chemically treated to improve its properties.
It is furthermore an object of the invention to provide a textile laminate which is highly abrasion-resistant and colourable.

It is also an object of the invention to provide a textile laminate for use in protective clothing, such as motorcyclist's clothing.

These and other problems of the invention are solved by providing a textile laminate made from a waterproof and water-vapour permeable functional layer together with a textile layer manufactured from a cover-core yam in which a core is made from an aramid fibre having a high longitudinal tensile strength and a sheath is disposed about said core made from polyamide 6.6 sheath material having high abrasion resistance. This construction allows the manufacture of textiles which are both extremely strong and abrasion resistant. Furthermore the sheath protects the core from degradation in its tensile strength that might occur, for example, by exposure to UV light. Since the core material has a high tensile strength, there is no requirement to chose the sheath material such that this material also provides the cover-core yam with a high tensile strength. Instead material may be chosen which is highly abrasion resistant and has further advantageous properties such that it has particle receptors and can be dyed or treated with water resistant chemicals. Preferably the sheath is spun about said core.

In this context particle receptors means that the fibres in the sheath material are able to chemically or physically bond with other particles. Some fibres, such as dye particles, may be held by van der Waal's forces. Other fibres have reactive groups, such as an -NH₃ group, to which the particles can chemically bond. Such particles include dye particles for colouring the fibres, water-resistant chemicals for improving the water resistance of the yarns made from the fibres or softeners for softening the yarns.

The core fibre of the cover-core yarn may be made from aramid fibres, , and the sheath material is selected from the group of materials comprising polyamides. Most preferably the core fibre is a para-aramid fibre such as a KEVLAR® fibre and the sheath material is polyamide 6.6 such as CORDURA®. This combination has the advantage that the para-aramid fibre is protected from ultra-violet light which is known to degrade its strength properties and the polyamide 6.6 fibre has particle receptors which are amorphous areas in the fibre structures in which particles can be held by physical bonds.

The textile laminate has a variety of uses in protective clothing such as protective clothing for motorcyclists. Preferably at least one backer fabric is laminated onto the other side of said functional layer. This backer fabric can act as a thermal insulation layer and/or as a liner to improve the comfort of the clothing made from the textile.

In the preferred embodiment of the invention, the textile layer is woven from the cover-core yam together with a second yam to obtain a textile layer having a weight between 100 and 500 g/m², and most preferably, between 250 and 500 g/m². This second yarn is made from a material chosen from the group of polyamide, polyester, polybenzimidazol and cotton and is most preferably a polyamide yam.

The functional layer is a membrane or a film and can be made from the group of materials consisting of polyesters, polyamide, polyolefins, polyvinylchloride, polyketones, polysulfones, polycarbonates, fluoropolymers including polytetrafluoroethylene, polyacrylates, polyurethanes, copolyetheresters, copolyetheramides. Most preferably the functional layer is made from expanded PTFE which is known to be highly waterproof and breathable.

### Description of the Drawings

Fig. 1 shows a protective suit for a motorcyclist made from the yam of this invention.
Fig. 2a shows a cross section of the textile from which the protective suit is manufactured.
Fig. 2b shows a cross section of the functional layer used in the textile of Fig. 2a.
Fig. 3 shows the apparatus for preparing the functional layer for a laminate according to the invention.
Fig. 4 shows a lamination apparatus.
Fig. 5 shows the yam according to this invention.

### Definitions

### Waterproof

Waterproof as used herein is meant having water-penetration-resistance (hydrostatic resistance) of 0.13 bar or more. This measurement is carried out using by placing a test sample with an area of 100 cm² under increasing water pressure. For this purpose, distilled water with a temperature of 20±2°C is used and the rate of increase of the water pressure was 60±3 cmH₂O/min. The water penetration resistance of the sample is then the pressure at which water appears on the opposite side of the sample. The exact method of carrying out this test is given in the ISO Standard No. 811 from 1981.

Water Vapour Permeable

Water vapour permeable as used herein is meant having a water-vapour-transmission rate RET of under 150 (m².Pa) / W. The water vapour transmission rate is measured using the Hohenstein MDM Dry Method which is explained in the Standard-Prüfvorschrift (Standard Test Rules) No. BPI 1.4 dated September 1987 and issued by the Bekleidungsphysiologisches Instituts e.V. Hohenstein, Germany.

### Functional Layer

The term functional layer is used to denote a layer which has the properties that it is both waterproof and water-vapour permeable.

### Yarn

The term yarn is used in the description is used to describe the continuous strands of material which are made into the textile. It includes strands, filaments, fibres and the like.

### dtex

This is a measurement commonly in use in the textile field. In metric units dtex is equivalent to g per 10,000 m of yam. So, for example, yarn of 500 dtex has a weight of 500 g per 10,000 m of yarn.

### Detailed Description of the Invention

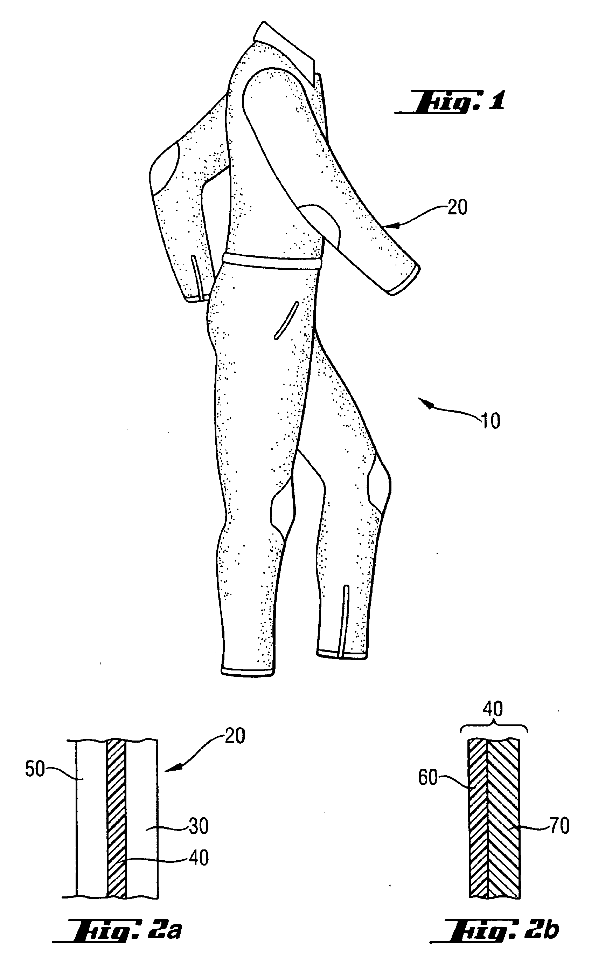

Fig. 1 shows a protective suit 10 for a motorcyclist made from the yarn according to this invention. As is shown in Fig. 2a a textile laminate 20 from which the protective suit 10 according to the invention is made is a three layer laminate in which an outer shell fabric 30 is made from a woven, non-woven or knitted yam manufactured according to this invention. The outer shell fabric 30 is laminated onto the upper surface of a functional layer 40 on which other side is laminated a backer fabric 50.

The functional layer 40 is formed in one embodiment of this invention from a porous polymeric layer 60 and a continuous non-porous hydrophilic water vapour permeable polymer layer 70 as is shown in Fig. 2b. The porous polymeric layer 60 preferably used in this invention is a microporous polymer membrane having a microscopic structure of open, interconnecting micro voids. It exhibits air permeability and as such imparts, or does not impair, water vapour permeability. The microporous membrane used in the textile laminate 20 described herein is typically of a thickness of 5 µm to 125 µm, most preferably of the order of about 5 µm to 25 µm. The useful polymers of the microporous membrane material include plastic polymers as well as elastomeric polymers. Examples of suitable polymers include polyesters, polyamide, polyolefins, polyketones, polysulfones, polycarbonates, fluoropolymers, polyacrylates, polyurethanes, copolyetheresters, copolyetheramides and the like. The preferred polymers are plastic polymers.

The most preferred microporous polymer membrane material is expanded microporous polytetrafluoroethylene (ePTFE). These materials are characterised by a multiplicity of open, interconnecting microscopic voids, high void volume, high strength, soft, flexible, stable chemical properties, high water vapour transfer and a surface that exhibits good contamination control characteristics. US Patents US-A- 3 953 566 and US-A-4 187 390 describe the preparation of such microporous expanded polytetrafluoroethylene membranes and are incorporated herein by reference.

The continuous water vapour permeable polymer layer 70 is a hydrophilic polymer. The hydrophilic layer selectively transports water by diffusion but does not support pressure-driven liquid or air flow. Therefore moisture, i.e. water vapour, is transported but the continuous layer of the polymer precludes the passage of such things as air-borne particles or micro-organisms. This characteristic imparts to the textile 20 including the porous polymer layer 60 and in turn to articles made from it, such as protective suits 10, good contamination control characteristics by functioning as a barrier to contaminants of all sizes. Furthermore the water vapour transmitting characteristics of the material allow for comfort characteristics to the wearer.

The continuous water vapour permeable polymer layer 60 is typically of a thickness of between 5 µm and 50 µm, preferably between about 10 µm and 25 µm. This thickness has been found to be a good practical balance to yield satisfactory durability, continuity and rate of water vapour transmission.

Although not limited to them, the continuous water-vapour permeable polymers most useful herein are those of the polyurethane family, the silicone family, the co-polyetherester family or the co-polyetherester amide family. Suitable co-polyetherester hydrophilic composition may be found in the teachings of US-A-4 493 870 (Vrouenraets) and US-A- 4 725 481 (Ostapachenko). Suitable hydrophilic compositions are described in US-A- 4 2340 838 (Foy et al.). Suitable polyurethanes maybe found in US-A-4 194 041 (Gore). A preferred class of continuous, water vapour permeable polymers are polyurethane, especially those containing oxyethylene units, such as described in US-A-4 532 316 (Henn). Typically these materials comprise a composition having a high concentration of oxyethylene units to impart hydrophilicity to the polymer. The concentration of oxyethylene units is typically greater than 45% by weight of the base polymer, preferably greater than 60%, most preferably greater than 70%.

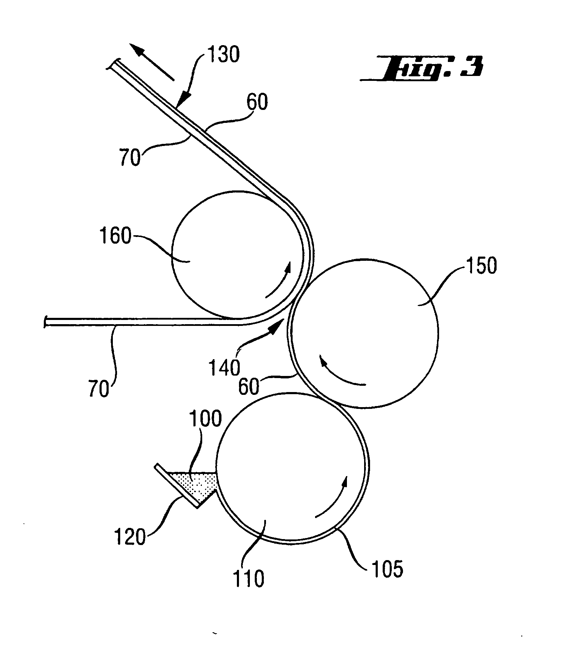

The functional layer 40 used to make the laminate 20 of this invention can be prepared according to the teachings of US-A- 5 026 591 (Henn et al.). This method is illustrated but not limited to the following description of a four roll stack as shown in Fig. 3. Metered control of the molten water vapour permeable polymer 100 is provided for by a gravure roll 110 and a doctor blade/polymer reservoir 120. The water vapour permeable polymer 100 is applied as a thin, continuous liquid film 105 to the continuously moving porous polymer membrane 130 in the nip 140 between two rotating rolls 150, 160; the first one of the rotating rolls 150 having been coated with the liquid polymer and the second one of the rotating rolls 160 providing support so as to force the liquid polymer partially into the porous structure of the polymer membrane 130.

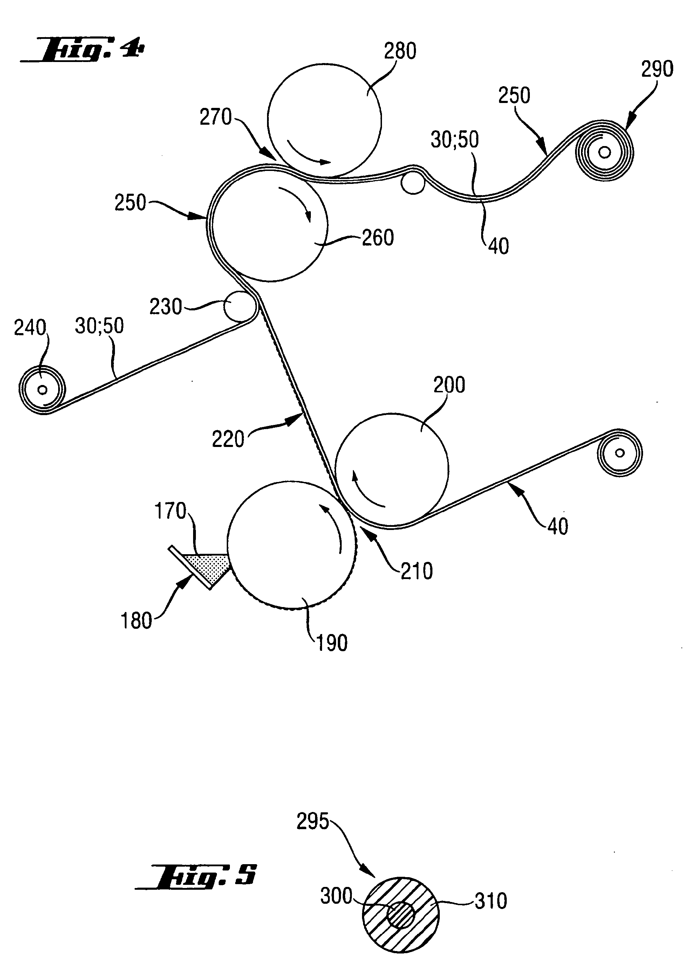

The outer shell fabric 30 and the backer fabric 50 are laminated to the functional layer 40 using a standard lamination process such as that illustrated in Fig. 4. For simplicity, Fig. 4 shows only the lamination of one fabric layer, i.e. either the outer shell fabric 30 or the backer fabric 50, onto one side of the functional layer 40. In the process, a dot pattern of heat-curing adhesive 170 from a doctor knife/adhesive reservoir 180 is metered onto the second side of the functional layer 40 by a gravure roll 190. The functional layer 40 is held under minimal tension against the gravure roll 190 by a low durometer rubber roll 200 at a pressure sufficient to effect removal of the adhesive dots onto the second side of the composite layer 5.

On exiting a printing nip 210, the adhesive dot coated composite layer 220 is brought to a laminating roll 230 where it is brought in intimate contact with the backer fabric 50 or outer shell fabric 30 provided from a storage roll 240. The laminate 250 created is cured at around 125°C and is then wrapped around a storage roll 260. Upon exiting the nip 270 between the roll 260 and a pressure roll 280, the laminate 250 is taken up on a storage roll 290.
A yarn 295 from which the outer shell fabric 30 is made is illustrated in Fig. 5 which shows a core 300 consisting of a first material around which is disposed a cover 310 made of a second material. The first material in the core 300 is in an embodiment of the invention an aramid fibre and more particularly a para-amid fibre such as a KEVLAR® fibre obtainable from E.I. Du Pont de Nemours, Inc.. More generally the core 300 is made from a fibre of a first material which has a very high tensile strength. Table 1 shows the tensile strengths of the fibres which could be used as the first material in the core 300. The tensile strengths are measured by the German DIN Standard No 53 834 Part 1 dated February 1976 under normal climatic conditions of (20±2) °C and (65±2) % relative humidity as defined in German DIN Standard No 53 802.

**Table 1**

| **Material** | **Trade Name** | **Source** | **Tensile Strength measured under normal climatic conditions (cN/dtex))** |
|---|---|---|---|
| Aramid | KEVLAR® | Du Pont | 17-27 |
| ePTFE | RASTEX® | W.L.Gore & Associates | 0.8-1.8 |
| Polyamide 6.6 | | various | 4-6 |
| Polyamide 6.6 | High Tenacity Nylon | various | 6-9 |
| Polyamide 6.6 | CORDURA® 550 | Du Pont | 5.9 |
| Polyamide 6.6 | CORDURA® 1100 | Du Pont | 5.18 |
| Graphite | | various | 10-17 |
| Glass | | various | 4-14 |
| Steel | | various | 3-4.8 |
| Polyethylene ND | | various | 3-7 |

Source: "Synthsesfasern" by Dr. Béla von Fallai, Weinheim: Verlag Chemie, 1981.

The cover or sheath 310 is made from a second material which in one embodiment of the invention is polyamid fibre and more particularly a polyamide 6.6 fibre such as a CORDURA® fibre obtainable from E.I. Du Pont de Nemours, Inc.. More generally the second material used in the cover 310 is selected so that a highly abrasion resistant yam is formed. An example of such fibres is polyamide.

In the preferred embodiment of the invention the core 300 is made from KEVLAR® fibre about which are disposed CORDURA® fibres. The KEVLAR® fibre imparts to the yam 295 a high tensile strength. The cover 310 is made from CORDURA® fibre which has a melting point of around 255°C and is highly abrasion resistant as will be described below. The CORDURA® fibre in contrast to the KEVLAR® fibre is resistant to degradation by ultra-violet light and may be dyed. The KEVLAR® fibre has a very high melting point of around 400°C such that even if the CORDURA® fibre melts, fabric 30 made from the yam 295 retains its structure. Thus the yarn 295 produced is stable to ultra-violet degradation, may be dyed to produce textiles of a desired colour and has a high tensile strength.

The core 300 of the yam 295 may be made from a single spun fibre, a multi-filament fibre or a plurality of torn fibres whose ends interlock with each other.

The yarn 295 depicted in Fig. 5 is preferably made by wrapping the fibre forming the cover 310 around the fibre forming the core 300. Such techniques are known in the art and machines capable of carrying out such a process are obtainable from Rieter in Ingolstadt, Germany, and/or Schalfhorst in Mönchengladbach, Germany.

The yam 295 thus produced may be woven or braided using known techniques, such as those using machines supplied by Dornier in Germany. The outer shell fabric 30 produced from the inventive yam 295 may have be heavier or lighter in weight with a different number of threads per square centimetre. Furthermore the yam 295 of the invention can be combined with other yarns in the outer shell fabric.

After weaving, the outer shell fabric 30 was laminated onto a functional layer 40 consisting of ePTFE and a polyurethane coating using the lamination techniques described in connection with Fig. 4. The backer fabric 50 was laminated onto the other side of the functional layer 40.

The three laminate layer forming the textile 20 for the protective suit 10 thus produced was then tested using an abrasion resistance test method. One such test method has been developed by the Technisches Universität in Darmstadt, Germany, (the "Darmstadt Method"). This test involves dropping onto a concrete surface a disc of 125 cm diameter onto which pieces of the fabric of the invention are stretched. The disc is mounted on an arm set to spin around an axis at a speed of 60 km/h before dropping and is then allowed to come to a halt. The speed is chosen to represent the moment of inertia of a motorcyclist falling onto the surface of the road on his back. The circumference of the circular path travelled by the disc prior to coming to a stop is 900 mm. The surface pressure between the textile sample and the road surface is 1.875 N/cm² and is comparable to the pressure which a 75 kg motorcyclist having a height of 1.75 m would exert on the road surface on a fall. The results of the test are given by measuring the degree to which holes in the fabric are observed by visual inspection. In each case three samples were used with the fabric being mounted at different angles to the direction of rotation. An index for the degree of abrasion is assigned to each sample according to the following table:

**Table 2**

| Abrasion Index | Value | Description |
|---|---|---|
| 1 | None | No holes formed |
| 2 | Small | Some holes formed on parts of the surface of the sample. |
| 3 | Partial | Areas of the surface of the sample had holes in them. In these areas there was no longer complete threads of materials |
| 4 | Severe | Holes formed on large parts of the surface of the sample. |
| 5 | Complete | Hole formation throughout the surface of the sample. |

In addition an average value for the coefficient of friction of the material was calculated. This should lie between 0.7 and 1.1 in accordance with the requirements for motorcyclists' clothing. Smaller values would lead in the event of a real accident to unacceptably long slides which could result in a collision between a motorcyclist and another object. Coefficients higher than 1.1 lead to a risk of the motorcyclists "somersaulting" on the road surface which might result in fractured bones.

### Example 1

An outer shell fabric 30 with a weight of 250 to 300 g/cm³ was made from a mixture of the yam 295 of the current invention and 500 dtex CORDURA® obtainable from Du Pont. The yam 295 of the invention was made with a core of 200 dtex KEVLAR® obtainable from Du Pont wrapped with a cover of approx. 800 dtex CORDURA® obtainable from DuPont to give a yam of 1000 dtex. The thus manufactured yam 295 was woven together with the 500 dtex CORDURA® in which every fourth weft was a yam according to the invention and every fourth warp was a yam according to the invention. The outer shell fabric 30 was then laminated to an ePTFE functional layer coated with a polyurethane layer to form a two layer laminate. A three layer laminate was made using a backer fabric of polyester with a weight of 30 g/m² laminated onto the other side of the functional layer 40.

### Comparative Examples

As a comparative examples, four existing fabrics were tested. The first comparative example was a two layer LEMANS fabric obtainable from W.L.Gore & Associates GmbH, Feldkirchen, Germany, having an outer shell comprising a mix of high tenacity polyamide 6.6 and CORDURA® yam laminated to a functional layer comprising an ePTFE layer coated with a polyurethane layer. The outer shell had a weight of 225 g/m².

The second comparative example was a Rökona jacket made from a mix of polyamide and polyester.

The third comparative example was a K300 fabric obtainable from Schöller. The K300 fabric is a polyamid 4-6 Kevlar woven fabric with a weight of 330g/m² and a Z-liner laminate.

The fourth comparative example was a CORDURA® 500 fabric obtainable from Magocchi in Italy.

Finally the fifth comparative example was 1.4 mm thick cowhide leather.

Table 3 shows the results of the abrasion index measured for the examples according to the Darmstadt method.

**Table 3**

| Nr. | Material | Weight (g/m²) | Angle | Starting Speed | Average coefficient of friction | Abrasion Index | Weight Loss (%) |
|---|---|---|---|---|---|---|---|
| Example 1 | **Two layer laminate** | 313,2 | 0 | 63,3 | 0,5 | 3 | 15 |
| | | | 45 | 58,8 | 0,42 | 3 | 14 |
| | | | 90 | 61,2 | 0,47 | 2 | 11 |
| Example 1 | **Three layer laminate** | 344,0 | 0 | 58,6 | 0,41 | 2 | 8 |
| | | | 45 | 61,9 | 0,48 | 3 | 13 |
| | | | 90 | 61,7 | 0,46 | 2 | 12 |
| Comparative Example 1 | **LEMANS** | 256,8 | 0 | 62,1 | 0,46 | 2 | 22 |
| | | | 45 | 59,6 | 0,44 | 4 | 30 |
| | | | 90 | 62,8 | 0,5 | 5 | 42 |
| Comparative Example 2 | **Rökona** | 285,3 | 0 | 58,8 | 0,33 | 4 | 9 |
| | | | 45 | 61,5 | 0,36 | 3 | 9 |
| | | | 90 | 63,1 | 0,35 | 2 | 4 |
| Comparative Example 3 | **K300+ Z Heavy** | 332,0 + 111,5 | 0 | 63,8 | 0,48 | 1 | 8 |
| | | | 45 | 60,2 | 0,43 | 2 | 9 |
| | | | 90 | 59,3 | 0,41 | 3 | 11 |
| Comparative Example 4 | **CORDURA ® 500** | 268,7 | 0 | 58,5 | 0,44 | 3 | 17 |
| | | | 45 | 63,2 | 0,51 | 3 | 19 |
| | | | 90 | 61,7 | 0,48 | 3 | 20 |
| Comparative Example 5 | **Leather 1.4 mm** | 828,6 | | 59,2 | 0,66 | 1 | 5 |

As can be seen by considering the results of table 3, the index of abrasion for the two layer and three layer laminates made according to the invention is under the value of three. The textiles of comparative examples 1 and 2 both show indices of abrasion greater than three. It will also be noted that the percentage weight loss of the two and three layer laminates made from the invention is substantially smaller than that of the laminate of comparative example 1. Comparative examples 3 and 4 both show indices of abrasion less than three. However, their weight is high which means that garments made from these materials are heavy. A garment made from CORDURA® 500 material would be comparatively light. However, sicne this material does not contain a waterproof functional layer, it is not as waterproof as the textile laminates of the invention or the laminates of comparative examples 1 and 3.

Measurement of the waterproofness and the water vapour permeability of some of the examples were carried out and are summarised in table 4.

**Table 4**

| Example Nr. | Material | Side | Waterproofness (bar) | Water Vapour Permeability (m².Pa)/W |
|---|---|---|---|---|
| | | | | |
| Example 1 | Two layer Laminate | | 3.92 | 61 |
| Comparative Example 2 | Rökona | Outer Side | 2.67 | |

## Claims

1. Textile laminate (20) comprising
a waterproof and water vapour permeable functional layer (40), and
at least one textile layer (30) laminated onto one side of said functional layer (40), said textile layer (30) is made from a first yam (295),
wherein the first yarn (295) comprising a core (300) made from an aramid fibre and
a sheath (310) disposed about said core (300) made from polyamide 6.6.

2. Textile laminate according to claim 1 wherein said sheath (310) of the yarn (295) is spun about said core (300).

3. Textile laminate according to claim 1 wherein said core (300) has a longitudinal tensile strength greater than 0.8 cN/dtex.

4. Textile laminate according to claim 4 wherein said core fibre (300) is a para-aramid fibre.

5. Textile laminate according to claim 1 wherein said core fibre (300) is made from a plurality of fibres having frayed ends interwined with each other.

6. Textile laminate according to claim 1 wherein said core fibre (300) is a multifilament fibre.

7. Textile laminate according to claim 1 wherein the abrasion resistance of said sheath material (310) is such that woven textile made from said yam (295) and having a weight of 300-400 g/m² has an abrasion index <3 when a disc is dropped from a height of 1 cm resulting in a pressure of 1.875 N/cm² and spinning at a speed such that its circumferential speed is 55-65 km/hr onto a concrete surface.

8. Textile laminate (20) according to claim 1 further comprising at least one backer fabric (50) laminated onto the other side of said functional layer (40).

9. Textile laminate (20) according to claim 1 wherein said textile layer (30) is woven from the first yam (295) together with a second yarn.

10. Textile laminate (20) according to claim 1 wherein said textile layer (30) has a weight between 100 and 500 g/m².

11. Textile laminate according to claim 10 wherein said textile layer (30) has a weight between 250 and 500 g/m².

12. Textile laminate (20) according to claim 9 wherein said second yam is made from a material chosen from the group of polyamide, polyester, polybenzimidazol and cotton.

13. Textile laminate (20) according to claim 12 wherein said second yarn is a polyamide yam.

14. Textile laminate (20) according to claim 1 wherein the functional layer (40) is a membrane or a film.

15. Textile laminate (20) according to claim 14 wherein the functional layer (40) is selected from the group of materials consisting of polyesters, polyamide, polyolefins, polyvinylchloride, polyketones, polysulfones, polycarbonates, fluoropolymers including polytetrafluoroethylene (PTFE), polyacrylates, polyurethanes, copolyetheresters, copolyetheramides.

16. Textile laminate (20) according to claim 15 wherein the functional layer (40) is made from expanded PTFE.

17. Textile laminate (20) according to claim 1 wherein the water vapour transmission rate (Ret) of the textile laminate (20) is less than 150 m².Pa/W.

18. Textile laminate (20) according to claim 17 wherein the water vapour transmission rate (Ret) of the textile laminate (20) is less than 20 m².Pa/W.

19. Textile laminate (20) according to claim 1 wherein the water entry pressure of the textile laminate (20) is greater than 0.13 bar.

20. Textile laminate (20) according to claim 19 wherein the water entry pressure of the textile laminate (20) is greater than 2.7 bar.

21. Protective clothing (10) made of the textile laminate according to one of claims 7 to 19.

## Patentansprüche

1. Textiles Laminat (20), enthaltend
- eine wasserdichte und wasserdampfdurchlässige Funktionsschicht (40) und
- mindestens eine auf eine Seite der Funktionsschicht (40) auflaminierte Textilschicht (30) aus einem ersten Garn (295),
- wobei das erste Garn (295) einen Kern (300) aus einer Aramidfaser und einen um den Kern (300) herum angeordneten Mantel (310) aus Polyamid 6,6 enthält.

2. Textiles Laminat nach Anspruch 1, bei dem der Kern (300) mit dem Mantel (310) des Garnes (295) umsponnen ist.

3. Textiles Laminat nach Anspruch 1, bei dem der Kern (300) eine Reißfestigkeit längs von mehr als 0,8 cN/dtex aufweist.

4. Textiles Laminat nach Anspruch 4, bei dem es sich bei der Kernfaser (300) um eine para-Aramidfaser handelt.

5. Textiles Laminat nach Anspruch 1, bei dem die Kernfaser (300) aus mehreren Fasern mit ineinander verschlungenen ausgefransten Enden hergestellt ist.

6. Textiles Laminat nach Anspruch 1, bei dem es sich bei der Kernfaser (300) um eine multifilamentäre Faser handelt.

7. Textiles Laminat nach Anspruch 1, bei dem der Mantel (310) so abriebfest ist, daß sich für ein aus dem Garn (295) hergestelltes 300-400 g/m² schweres Gewebe beim Fallenlassen einer sich mit einer Umfangsgeschwindigkeit von 55-65 km/h drehenden Scheibe aus einer Höhe von 1 cm, entsprechend einer Flächenpressung von 1,875 N/cm², auf eine Fläche aus Beton ein Abrasionsindex <3 ergibt.

8. Textiles Laminat (20) nach Anspruch 1, bei dem zusätzlich auf der anderen Seite der Funktionsschicht (40) ein verstärkend wirkendes textiles Flächengebilde (50) auflaminiert ist.

9. Textiles Laminat (20) nach Anspruch 1, bei dem es sich bei der Textilschicht (30) um ein aus dem ersten Garn (295) zusammen mit einem zweiten Garn hergestelltes Gewebe handelt.

10. Textiles Laminat (20) nach Anspruch 1, bei dem die Textilschicht (30) ein Flächengewicht zwischen 100 und 500 g/m² aufweist.

11. Textiles Laminat nach Anspruch 10, bei dem die Textilschicht (30) ein Flächengewicht zwischen 250 und 500 g/m² aufweist.

12. Textiles Laminat nach Anspruch 9, bei dem das zweite Garn aus einem unter Polyamid, Polyester, Polybenzimidazol und Baumwolle ausgewählten Material hergestellt ist.

13. Textiles Laminat (20) nach Anspruch 12, bei dem es sich bei dem zweiten Garn um ein Polyamidgarn handelt.

14. Textiles Laminat (20) nach Anspruch 1, bei dem es sich bei der Funktionsschicht (40) um eine Membran oder um eine Folie handelt.

15. Textiles Laminat (20) nach Anspruch 14, bei dem die Funktionsschicht (40) ausgewählt ist aus der Gruppe von Materialien, bestehend aus Polyestern, Polyamid, Polyolefinen, Polyvinylchlorid, Polyketonen, Polysulfonen, Polycarbonaten, Fluorpolymeren beinhaltend Polytetrafluorethylen (PTFE), Polyacrylaten, Polyurethanen, Copolyetherestern, Copolyetheramiden.

16. Textiles Laminat (20) nach Anspruch 15, bei dem die Funktionsschicht (40) aus expandiertem PTFE hergestellt ist.

17. Textiles Laminat (20) nach Anspruch 1, bei dem die Wasserdampfdurchlässigkeitsrate (Ret) des textilen Laminats (20) weniger als 150 m².Pa/W beträgt.

18. Textiles Laminat (20) nach Anspruch 17, bei dem die Wasserdampfdurchlässigkeitsrate (Ret) des textilen Laminats (20) weniger als 20 m².Pa/W beträgt.

19. Textiles Laminat (20) nach Anspruch 1, bei dem der Wassereintrittsdruck des textilen Laminats (20) mehr als 0,13 bar beträgt.

20. Textiles Laminat (20) nach Anspruch 19, bei dem der Wassereintrittsdruck des textilen Laminats (20) mehr als 2,7 bar beträgt.

21. Schutzbekleidung (10), hergestellt aus dem textilen Laminat gemäß einem der Ansprüche 7 bis 19.

## Revendications

1. Stratifié textile (20) comprenant
une couche fonctionnelle imperméable à l'eau et perméable à la vapeur d'eau (40), et
au moins une couche de textile (30) stratifiée sur une face de ladite couche fonctionnelle (40),
ladite couche de textile (30) est faite d'un premier fil (295),
dans lequel le premier fil (295) comprend une âme (300) faite d'une fibre d'aramide et d'une gaine (310) disposée autour de ladite âme (300) faite de polyamide 6,6.

2. Stratifié textile selon la revendication 1 dans lequel ladite gaine (310) du fil (295) est filée autour de ladite âme (300).

3. Stratifié textile selon la revendication 1 dans lequel ladite âme (300) a une résistance à la traction longitudinale supérieure à 0,8 cN/dtex.

4. Stratifié textile selon la revendication 4 dans lequel la fibre de ladite âme (300) est une fibre de para-aramide.

5. Stratifié textile selon la revendication 1 dans lequel la fibre de ladite âme (300) est faite d'une pluralité de fibres ayant des bouts effilochés entrelacés les uns avec les autres.

6. Stratifié textile selon la revendication 1 dans lequel la fibre de ladite âme (300) est une fibre multi-filament.

7. Stratifié textile selon la revendication 1 dans lequel la résistance à l'abrasion du matériau de ladite gaine (310) est telle que le textile tissé fait dudit fil (295) et ayant un poids de 300-400 g/m² ait un indice d'abrasion <3 quand on fait tomber un disque d'une hauteur de 1 cm, résultant en une pression de 1,875 N/cm² et tournant à une vitesse telle que sa vitesse circonférentielle soit de 55-65 km/h, sur une surface en béton.

8. Stratifié textile (20) selon la revendication 1 comprenant en outre au moins un tissu de renfort (50) stratifié sur l'autre face de ladite couche fonctionnelle (40).

9. Stratifié textile (20) selon la revendication 1 dans lequel ladite couche de textile (30) est tissée à partir du premier fil (295) conjointement avec un deuxième fil.

10. Stratifié textile (20) selon la revendication 1 dans lequel ladite couche de textile (30) a un poids compris entre 100 et 500 g/m².

11. Stratifié textile selon la revendication 10 dans lequel ladite couche de textile (30) a un poids compris entre 250 et 500 g/m².

12. Stratifié textile (20) selon la revendication 9 dans lequel ledit deuxième fil est fait d'un matériau choisi dans le groupe du polyamide, du polyester, du polybenzimidazole et du coton.

13. Stratifié textile (20) selon la revendication 12 dans lequel ledit deuxième fil est un fil de polyamide.

14. Stratifié textile (20) selon la revendication 1 dans lequel la couche fonctionnelle (40) est une membrane ou un film.

15. Stratifié textile (20) selon la revendication 14 dans lequel la couche fonctionnelle (40) est choisie dans le groupe de matériaux constitué des polyesters, du polyamide, des polyoléfines, du poly(chlorure de vinyle), des polycétones, des polysulfones, des polycarbonates, des polymères fluorés, notamment du polytétrafluoroéthylène (PTFE), des polyacrylates, des polyuréthanes, des copolyétheresters, des copolyétheramides.

16. Stratifié textile (20) selon la revendication 15 dans lequel la couche fonctionnelle (40) est faite de PTFE expansé.

17. Stratifié textile (20) selon la revendication 1 dans lequel la vitesse de transmission de la vapeur d'eau (Ret) du stratifié textile (20) est inférieure à 150 m².Pa/W.

18. Stratifié textile (20) selon la revendication 17 dans lequel la vitesse de transmission de la vapeur d'eau (Ret) du stratifié textile (20) est inférieure à 20 m².Pa/W.

19. Stratifié textile (20) selon la revendication 1 dans lequel la pression d'infiltration de l'eau dans le stratifié textile (20) est supérieure à 0,13 bar.

20. Stratifié textile (20) selon la revendication 19 dans lequel la pression d'infiltration de l'eau dans le stratifié textile (20) est supérieure à 2,7 bar.

21. Vêtement de protection (10) fait du stratifié textile selon l'une des revendications 7 à 19.
